# EUROPEAN PATENT APPLICATION

(11) **EP 2 317 742 A1**
(43) Date of publication of application: **04.05.2011**
(21) Application number: 10172494.6
(22) Date of filing: 11.08.2010
(51) Int. Cl.: H04M 1/725

(54) **DECT base and DECT terminal**

(30) Priority: 29.10.2009 CN 200920267989 U
(71) Applicant: Huawei Device Co., Ltd., Longgang District Shenzhen Guangdong 518129 (CN)
(72) Inventor: Deng, Yishi, Shenzhen Guangdong 518129 (CN); Ye, Hong, Shenzhen Guangdong 518129 (CN); Zhang, Ke, Shenzhen Guangdong 518129 (CN)
(74) Representative: Barth, Stephan Manuel

(57) **Abstract**

A digital enhanced cordless telecommunications (DECT) base and a DECT terminal are disclosed. The DECT base includes a casing, a central processing unit (CPU), and a DECT module. The DECT base further includes: a high-speed packet access (HSPA) interface module, set inside the casing and connected to the CPU, where the CPU is connected to the DECT module and the HSPA interface module is configured to provide an HSPA card with interfaces to implement wireless communications between the base and the network over the HSPA protocol; and an antenna, connected to the HSPA interface module and configured to receive/transmit signals. The HSPA interface module on the DECT base is configured to connect the HSPA card. In this way, the DECT base acts as the hub of home mobile communications and is connected to a wireless base station and a handheld DECT terminal (that is, a microphone).

## Description

### Field of the Invention

The invention relates to a wireless communications technology, and in particular, to a digital enhanced cordless telecommunications (DECT) base and a DECT terminal.

### Background of the Invention

With the rapid development of home network broadband services, the third generation (3G) wireless communications services are prosperous. As more and more traditional fixed network services are integrated with mobile services, home users have higher requirements for the communication experience, application expectation, and cost reduction. In addition, the home users are insensitive to the medium and type of the access interface.

Currently, the access modes for mainstream communication products include wired access and wireless access. The product forms in wired access mode include copper wire + fixed base + wired microphone and copper wire + fixed base + wireless microphone. The product forms in wireless access mode include wireless + fixed base + wired microphone and mobile phone.

The communications products adopting the forms such as copper wire + fixed base + wired microphone and copper wire + fixed base + wireless microphone are fixed-line telephones, which communicate through telephone lines. Taking the fixed call service of China Telecom as an example, the telephone set is fixed at a location, which requires a user to make calls at the specified location.

The communications products adopting the form of wireless + fixed base + wired microphone are similar to fixed-line telephones, with mere changes in the outgoing lines. That is, the wireless mode is used.

The mobile phone communicates through a wireless network. Taking the GoTone service of China Mobile as an example, users are not limited by the space as long as they are in the coverage of wireless signals.

The fixed-line telephone also includes a DECT telephone.

In the prior art, the DECT terminal includes a DECT base and a DECT microphone. The DECT base includes a casing, an access cable, a central processing unit (CPU), and a DECT module. The CPU and the DECT module are set inside the casing. The access cable is connected to the CPU through the casing. After the CPU processes the signals transmitted by the access cable, the signals are sent to the DECT module. The DECT module communicates with the DECT microphone, so that the call of the DECT terminal is implemented. The DECT base is accessed in wired mode. That is, the outgoing line is a wired line, and the DECT base is accessed through the access cable.

The DECT base communicates with the DECT microphone in wireless mode over the DECT protocol.

During the implementation of the invention, the inventor finds at least the following problems in the prior art: Because the DECT base is accessed in wired mode, the physical location for placing the DECT base is limited.

### Summary of the Invention

Embodiments of the invention provide a DECT base and a DECT terminal to overcome the limitation of physical locations for placing the DECT base.

A DECT base includes a casing, a CPU, and a DECT module. The DECT base further includes:
a high-speed packet access (HSPA) interface module, set inside the casing and connected to the CPU, where the CPU is connected to the DECT module and the HSPA interface module is configured to provide an HSPA card with interfaces to implement wireless communications between the base and a network over an HSPA protocol; and
an antenna, connected to the HSPA interface and configured to receive/transmit signals.

A DECT terminal includes the preceding DECT base.

In the preceding embodiments, the HSPA interface module on the DECT base is configured to connect the HSPA card. When the HSPA card is available, the DECT base may implement wireless access and transmission by using the antenna, the HSPA card, and the HSPA interface module. Thus, the DECT base may be used as a trunk connecting to 3G networks. In this way, the uplink DECT base with a pluggable HSPA card may act as the hub of inexpensive home mobile communications, and be connected to a wireless base station and a handheld DECT terminal (that is, a microphone). The DECT base is not limited by the cabling space at home, and may be placed at any proper locations. It may even be used as a home ornament.

The invention is hereinafter described in detail with reference to embodiments and accompanying drawings.

### Brief Description of the Drawings

FIG. 1 shows a structure of a DECT base in an embodiment of the invention;
FIG. 2 shows a structure of another DECT base in an embodiment of the invention;
FIG. 3 shows a structure of a DECT terminal in an embodiment of the invention; and
FIG. 4 illustrates the application of a DECT terminal in an embodiment of the invention.

### Detailed Description of the Invention

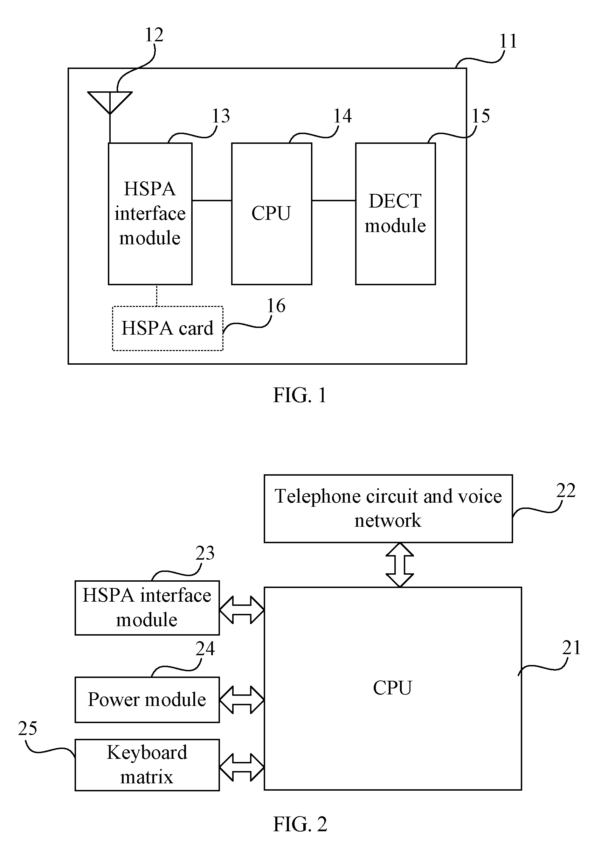

FIG. 1 shows a structure of a DECT base in an embodiment of the invention. The DECT base includes a casing 11, an antenna 12, an HSPA interface module 13, a CPU (that is, CPU 14), and a DECT module 15. In this embodiment, the antenna 12, the HSPA interface module 13, the CPU 14, and the DECT module 15 are set inside the casing 11. The antenna 12 may be set at other locations or outside the casing 11 according to the actual need. The antenna 12 is configured to receive/transmit signals and connected to the HSPA interface module 13 to implement wireless communications between the DECT base and external entities over the HSPA protocol. The HSPA interface module 13 is connected to the CPU 14 and configured to provide the HSPA card with interfaces to implement wireless communications between the DECT base and the network over the HSPA protocol. The CPU 14 is connected to the DECT module 15. After the CPU 14 processes the signals sent from the HSPA interface module 13, the signals are sent to the DECT module 15, so that the call of the DECT terminal is implemented through the communication between the DECT module 15 and the DECT microphone.

In this embodiment, the HSPA interface module on the DECT base is configured to connect the HSPA card. When the HSPA card is available, the DECT base may implement wireless access and transmission by using the antenna, the HSPA card, and the HSPA interface module. Thus, the DECT base may be used as a trunk connecting to 3G networks. In this way, the uplink DECT base with a pluggable HSPA card may act as the hub of inexpensive home mobile communications, and be connected to a wireless base station and a handheld DECT terminal (that is, the microphone). The DECT base is not limited by the cabling space at home, and may be placed at any proper locations. It may even be used as a home ornament.

The DECT base provided in this embodiment may further include an HSPA card 16 connected to the HSPA interface module 13. After the HSPA card 16 accesses the DECT base through the HSPA interface module 13, the HSPA card 16 communicates with the wireless base station.

The HSPA card 16 may be connected to the HSPA interface module 13 in plugging mode. That is, the HSPA card 16 may be plugged in the DECT base to establish a connection with the HSPA interface module 13. The HSPA card 16 may also be fixed in the DECT base, and establish a fixed connection with the HSPA interface module 13, for example, establishing a connection through the circuit on the printed circuit board (PCB). Or the HSPA card 16 may be connected to the HSPA interface module 13 through a conductor.

FIG. 2 shows a structure of another DECT base in an embodiment of the invention. The DECT base includes a CPU 21, a telephone circuit and voice network 22, an HSPA interface module 23, a power module 24, and a keyboard matrix 25. The CPU 21 is configured to perform data processing on signals. The telephone circuit and voice network 22 is a basic telephone circuit. For details about the HSPA interface module 23, see the description of the HSPA interface module 13 shown in FIG. 1. The power module 24 is configured to supply power to the CPU 21, the telephone circuit and voice network 22, and the HSPA interface module 23. The keyboard matrix 25 is configured to provide users with interfaces for controlling the DECT terminal. The CPU 21 is configured to control the communications (for example, answering calls and making calls) of the DECT terminal according to the control signals input by the keyboard matrix 25.

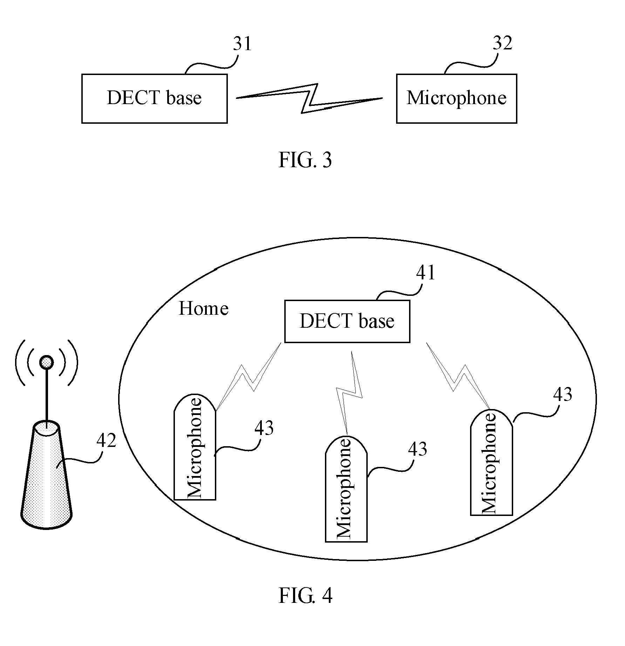

FIG. 3 shows a structure of a DECT terminal in an embodiment of the invention. The DECT terminal includes a DECT base 31 and a microphone 32. The DECT base 31 may be any one of the DECT bases provided in the preceding embodiments. The DECT base 31 is connected to the microphone 32 in wireless mode. The DECT base 31 communicates with the microphone 32 in wireless mode.

In this embodiment, a data card (that is, an HSPA card) may be plugged in the DECT base of the DECT terminal. The HSPA card is connected to the DECT base through a universal serial bus (USB) interface or similar communication interfaces. The HSPA card may be freely plugged or unplugged and replaced. A user may select a wireless service operator such as 2G/3G, TD, and WCDMA operators autonomously by selecting different HSPA card providers at a time.

In addition, the evolution of the DECT technology may enhance data communications constantly. The current CATiq commercial standard already requires that a base should support six microphones at the same time. In addition, the mainstream integrated circuit (IC) solution providers already launch a corresponding chip. In this way, with the continuously upgraded and evolved CATiq technology, users can enjoy inexpensive and high-quality wireless communication services at home. As shown in FIG. 4, according to the base station information source (the source address), a DECT terminal user may obtain streaming information over the multi-path/multi-call communication protocol in the CATiq technology and by using a multicast method. This is different from the 3G wireless communication technology in which the base station must unicast streaming information to each 3G wireless mobile phone. The DECT base 41 acts as the trunk of the home base station and forwards the information from the cell base station 42. In this way, the mobile terminal, that is, the microphone 43, does not need to directly communicate with the cell base station 42. The mobile communications between family members may be implemented directly through the internal DECT base 41 (like a WLAN), without using the cell base station 42, so that the wireless bandwidths occupied by the whole family are optimized. Thus, inexpensive mobile communications are realized in residential areas, and 3G wireless bandwidths are optimized. In addition, the prerequisite to DECT is that the microphone ID and the base ID are registered successfully. However, the CATiq protocol has a multi-call feature, so that the DECT base 41 can inform the microphone 43 in a call that a new terminal (that is, a microphone) joins the session, thus solving the problem in the home fixed-line network where an extension is easily eavesdropped.

It should be noted that the above embodiments are merely provided for elaborating on the technical solution of the invention, but not intended to limit the invention. Although the invention has been described in detail with reference to the foregoing embodiments, it is apparent that those skilled in the art can make various modifications and variations thereto without departing from the scope of the invention.

## Claims

1. A digital enhanced cordless telecommunications (DECT) base, comprising a casing, a central processing unit (CPU), and a DECT module, and further comprising:
a high-speed packet access (HSPA) interface module, set inside the casing and connected to the CPU, wherein the CPU is connected to the DECT module and the HSPA interface module is configured to provide an HSPA card with interfaces to implement wireless communications between the base and a network over an HSPA protocol; and
an antenna, connected to the HSPA interface module and configured to receive/transmit signals.

2. The DECT base according to claim 1, further comprising:
an HSPA card, connected to the HSPA interface module and configured to implement wireless communications with the network over the HSPA protocol.

3. The DECT base according to claim 2, wherein the HSPA card is connected to the HSPA interface module in plugging mode.

4. The DECT base according to claim 2, wherein the HSPA card is connected to the HSPA interface module in fixed mode.

5. The DECT base according to claim 2, wherein the HSPA card is connected to the HSPA interface module through a conductor.

6. A digital enhanced cordless telecommunications (DECT) terminal, comprising a DECT base and a microphone, wherein the DECT base comprises a casing, a central processing unit (CPU), and a DECT module, and the DECT base further comprises:
a high-speed packet access (HSPA) interface module, set inside the casing and connected to the CPU, wherein the CPU is connected to the DECT module and the HSPA interface module is configured to provide an HSPA card with interfaces to implement wireless communications between the base and a network over an HSPA protocol; and
an antenna, connected to the HSPA interface module and configured to receive/transmit signals.

7. The DECT terminal according to claim 6, wherein the DECT base further comprises:
an HSPA card, connected to the HSPA interface module and configured to implement wireless communications with the network over the HSPA protocol.

8. The DECT terminal according to claim 7, wherein the HSPA card is connected to the HSPA interface module in plugging mode.

9. The DECT terminal according to claim 7, wherein the HSPA card is connected to the HSPA interface module in fixed mode.

10. The DECT terminal according to claim 7, wherein the HSPA card is connected to the HSPA interface module through a conductor.
